# DEMANDE DE BREVET EUROPEEN

(11) **EP 4 439 318 A1**
(43) Date de publication de la demande: **02.10.2024**
(21) Numéro de dépôt: 24164623.1
(22) Date de dépôt: 19.03.2024
(51) Int. Cl.: G06F 13/38

(54) **CIRCUIT ET PROCÉDÉ D'INTERFACE**

(30) Priorité: 31.03.2023 FR 2303152
(71) Demandeur: STMicroelectronics International N.V., 1228 Plan-les-Ouates, Geneva (CH)
(72) Inventeur: PELISSIER, Gilles, 38800 CHAMPAGNIER (FR); ANQUET, Nicolas, 38000 GRENOBLE (FR)
(74) Mandataire: Cabinet Beaumont

(57) **Abrégé**

La présente description concerne un circuit de couplage et de chaînage configuré (114) pour recevoir, par l'intermédiaire d'un premier bus (116, 122) relié à l'un parmi un bus système (110) d'un dispositif électronique (100) et un premier circuit périphérique (118) du dispositif électronique, une donnée d'origine et la transmettre vers un deuxième bus (122, 116) du dispositif électronique relié à l'autre parmi le bus système et le premier circuit périphérique, le circuit de couplage et de chaînage étant en outre configuré pour intercepter la donnée d'origine et transmettre une copie de la donnée d'origine vers un troisième bus (124) du dispositif relié à un deuxième circuit périphérique (120) du dispositif.

## Description

### Domaine technique

La présente description concerne de façon générale le domaine des circuits électroniques, et en particulier un circuit d'interface pour des circuits périphériques.

### Technique antérieure

Il existe des opérations de traitement de données qui font intervenir plusieurs circuits périphériques. Par exemple, une opération cryptographique peut être accompagnée par une opération de génération ou de contrôle d'un code de redondance cyclique (CRC, de l'anglais "Cyclic Redundancy Code"). Lorsqu'une donnée d'un dispositif électronique est transmise à un circuit cryptographique, elle peut donc être aussi transmise à un circuit de génération et/ou de contrôle de code de redondance. Le code de redondance cycle est un code de vérification d'erreur permettant de vérifier si la donnée a subi des modifications lors de son transfert et/ou de son stockage.

Un problème avec des mises en oeuvre existantes de telles opérations, impliquant deux circuits périphériques, est qu'elles sont associées avec un temps de traitement relativement long et/ou avec une consommation d'énergie relativement importante.

### Résumé de l'invention

Un mode de réalisation prévoit un circuit de couplage et de chainage configuré pour recevoir, par l'intermédiaire d'un premier bus relié à l'un parmi un bus système d'un dispositif électronique et un premier circuit périphérique du dispositif électronique, une donnée d'origine et la transmettre vers un deuxième bus du dispositif électronique relié à l'autre parmi le bus système et le premier circuit périphérique, le circuit de couplage et de chaînage étant en outre configuré pour intercepter la donnée d'origine et transmettre une copie de la donnée d'origine vers un troisième bus du dispositif relié à un deuxième circuit périphérique du dispositif.

Selon un mode de réalisation, le circuit ci-dessus est en outre configuré pour générer une demande d'accès pour écriture de la copie de la donnée d'origine, au deuxième circuit, sur la base de la réception de la donnée d'origine.

Selon un mode de réalisation, le premier bus est relié au bus système et le deuxième bus est relié au premier circuit périphérique, la donnée d'origine étant transmise au circuit sur la base d'une demande d'accès au premier circuit pour écriture.

Selon un mode de réalisation, le premier bus est relié au premier circuit périphérique et le deuxième bus est relié au bus système, la donnée d'origine étant transmise au circuit sur la base d'une demande d'accès au premier circuit pour lecture.

Selon un mode de réalisation, le circuit ci-dessus comprend une mémoire volatile, reliée au deuxième circuit périphérique, configurée pour recevoir la copie de la donnée transmise et la fournir au deuxième circuit périphérique.

Selon un mode de réalisation, la mémoire volatile est une mémoire de type premier arrivé-premier sorti.

Un mode de réalisation prévoit un dispositif électronique comprenant :
- le circuit de couplage et de chainage ci-dessus ;
- les premier et deuxième circuits périphériques ; et
- le bus système.

Selon un mode de réalisation, le circuit de couplage et de chaînage est un circuit d'accès direct à la mémoire.

Selon un mode de réalisation, le deuxième circuit périphérique est un circuit de redondance cyclique configuré pour calculer un code d'erreur sur la base de la donnée fournie par le circuit de couplage et chainage.

Selon un mode de réalisation, le premier circuit périphérique est un circuit cryptographique.

Selon un mode de réalisation, le circuit cryptographique est configuré pour générer un code d'erreur d'exécution indiquant si une erreur d'exécution a lieu.

Selon un mode de réalisation, le circuit de couplage et de chaînage comprend en outre une mémoire volatile reliée au deuxième circuit périphérique et configurée pour recevoir la copie de la donnée transmise et la fournir au deuxième circuit périphérique, le circuit de couplage et de chaînage étant en outre configuré pour supprimer le contenu de la mémoire volatile sur la base du code d'erreur d'exécution.

Selon un mode de réalisation, le dispositif électronique ci-dessus comprend en outre un troisième circuit périphérique relié au circuit de couplage et de chainage par l'intermédiaire d'un quatrième bus, le circuit de couplage et de chaînage étant en outre configuré pour transmettre une copie de la donnée d'origine vers le quatrième bus.

Un mode de réalisation prévoit un procédé de couplage ou de chainage comprenant :
- la réception, par un circuit de couplage et de chaînage et par l'intermédiaire d'un premier bus relié à l'un parmi un bus système d'un dispositif électronique et un premier circuit périphérique du dispositif électronique, d'une donnée d'origine ;
- la transmission, par le circuit de couplage et de chaînage et vers un deuxième bus du dispositif électronique relié à l'autre parmi le bus système et le premier circuit périphérique ;
- l'interception, par le circuit de couplage et de chaînage, de la donnée d'origine ; et
- la transmission, par le circuit de couplage et de chaînage, d'une copie de la donnée d'origine, vers un troisième bus du dispositif relié à un deuxième circuit périphérique du dispositif.

Selon un mode de réalisation, une demande d'accès au deuxième circuit périphérique pour écriture de la copie de la donnée d'origine est générée par le circuit de couplage et de chainage sur la base de la réception de la donnée d'origine.

Selon un mode de réalisation, le circuit de couplage et de chainage génère la demande d'accès au deuxième circuit périphérique pour écriture sur la base d'une demande d'accès pour écriture ou de lecture dans le premier circuit périphérique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs d'un dispositif électronique selon un mode de réalisation de la présente description ;
la figure 2A est un schéma par blocs illustrant un exemple de mise en oeuvre d'une opération de couplage selon un mode de réalisation de la présente description ;
la figure 2B est un schéma par blocs illustrant un exemple de mise en oeuvre d'une opération de chaînage selon un mode de réalisation de la présente description ;
la figure 3A illustre un exemple de données manipulées par un circuit de contrôle lors d'une opération de couplage ;
la figure 3B illustre un exemple de données manipulées par un circuit de contrôle lors d'une opération de chaînage ;
la figure 4 est un organigramme illustrant des étapes d'un procédé de couplage et/ou de chaînage entre deux circuits périphériques ;
la figure 5A est un schéma par blocs illustrant un autre exemple de mise en oeuvre d'une opération de couplage selon un autre mode de réalisation de la présente description ; et
la figure 5B est un schéma par blocs illustrant un autre exemple de mise en oeuvre d'une opération de chaînage selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le calcul de codes d'erreur par un circuit de contrôle de redondance cyclique ainsi que l'utilisation des codes d'erreur ne sont pas décrits en détails.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

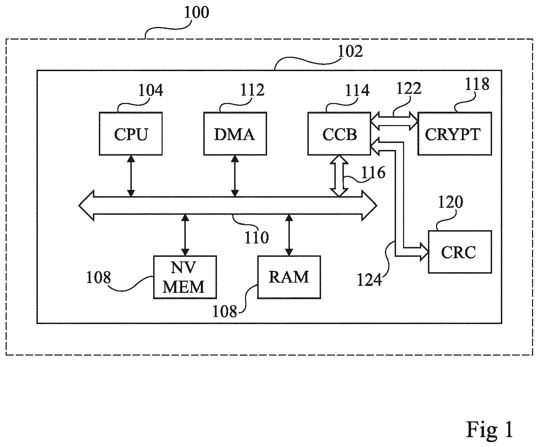

La figure 1 est un schéma par blocs d'un dispositif électronique 100 comprenant un circuit intégré 102 selon un mode de réalisation de la présente description.

Le dispositif électronique 100 est par exemple un dispositif électronique mobile, tel qu'un téléphone mobile, ou une carte électronique telle qu'une carte à microcircuits. Par exemple, le dispositif électronique 100 est une carte à microcircuits implémentant une clef électronique commandant l'ouverture et/ou la fermeture d'une voiture ou autre véhicule. Dans un autre exemple, le dispositif électronique 100 est un dispositif commandant des dispositifs domotiques, etc.

Le circuit 102 comprend par exemple un processeur 104 (CPU) relié à une mémoire non volatile 106 (NV MEM) et à une mémoire volatile 108 (RAM) par l'intermédiaire d'un bus système 110. A titre d'exemple, la mémoire 106 est une mémoire de type Flash, et la mémoire 108 est une mémoire volatile, par exemple de type RAM (de l'anglais "Random Access Memory") .

Le circuit 102 comprend en outre, par exemple, un circuit d'accès direct à la mémoire 112 (DMA) relié au bus 110.

Selon un mode de réalisation, le circuit 102 comprend en outre un circuit de couplage et chainage 114 (CCB - de l'anglais « Coupling and Chaining Bridge ») relié au bus 110 par l'intermédiaire d'un bus 116. Dans un autre exemple, le circuit de couplage et chainage 114 est un circuit d'accès direct à la mémoire, par exemple similaire au circuit 112, et dans ce cas, le circuit 112 est par exemple omit. Le bus 116 est par exemple un bus de type AHB (de l'anglais » Advanced High-performance Bus »). Dans d'autres exemples, le bus 116 est un bus de type APB (de l'anglais « Advanced Peripheral Bus ») ou AXI (de l'anglais « Advanced External Interface »).

Le circuit 102 comprend en outre, par exemple, un circuit cryptographique 118 (CRYPT), ainsi qu'un circuit de contrôle de redondance cyclique 120 (CRC). Les circuits 118 et 120 sont respectivement reliés au circuit de couplage et chainage 114 par l'intermédiaire des bus 122 et 124. Par exemple, les circuits 118 et 120 ne sont pas reliés directement au bus 110, mais sont reliés au bus 110 uniquement par l'intermédiaire du circuit 114. A titre d'exemple, les bus 122 et 124 sont des bus de type AHB. Dans d'autres exemple les bus 122 et 124 sont des bus de type APB ou AXI.

Bien que les circuits 118 et 120 sont illustrés comme étant un circuit cryptographique et un circuit de contrôle de redondance cyclique, d'autres types de circuits périphériques peuvent être considérés. Ainsi, de manière générale, le circuit de couplage et chainage 114 est relié à un premier circuit périphérique par l'intermédiaire du bus 122, tel que par exemple un circuit cryptographique, et à un deuxième circuit périphérique par l'intermédiaire du bus 124, tel que par exemple un circuit de contrôle de redondance cyclique.

Selon un mode de réalisation, le circuit de couplage et chainage 114 est configuré pour effectuer une opération de couplage. Lors d'une opération de couplage, le circuit de couplage et de chaînage 114 est configuré pour recevoir du bus système 110, par l'intermédiaire du bus 116, une donnée d'origine et la transmettre vers le circuit périphérique 118, par l'intermédiaire du bus 122. Le circuit de couplage et de chaînage 114 est en outre configuré pour intercepter la donnée d'origine et transmettre une copie de la donnée d'origine vers le bus 124, relié au circuit périphérique 120.

De façon alternative ou additionnelle, le circuit de couplage et chainage 114 est configuré pour effectuer une opération de chaînage. Lors d'une opération de chaînage, le circuit de couplage et de chaînage 114 est configuré pour recevoir du circuit périphérique 118, par l'intermédiaire du bus 122, une donnée d'origine et la transmettre vers le bus système 110, par l'intermédiaire du bus 116. Le circuit de couplage et de chaînage 114 est en outre configuré pour intercepter la donnée d'origine et transmettre une copie de la donnée d'origine vers le bus 124, relié au circuit périphérique 120.

A titre d'exemple, le circuit 102 comprend d'autres circuits périphériques, en plus du circuit 118. Ces autres circuits périphériques sont par exemple aussi chacun relié au circuit de couplage et de chaînage 114 par l'intermédiaire d'un bus dédié. A titre d'exemple, le circuit 102 comprend, en plus des circuits 118 et 120, un circuit périphérique, relié au circuit de couplage et de chaînage 114, configuré pour effectuer des opérations de hachage.

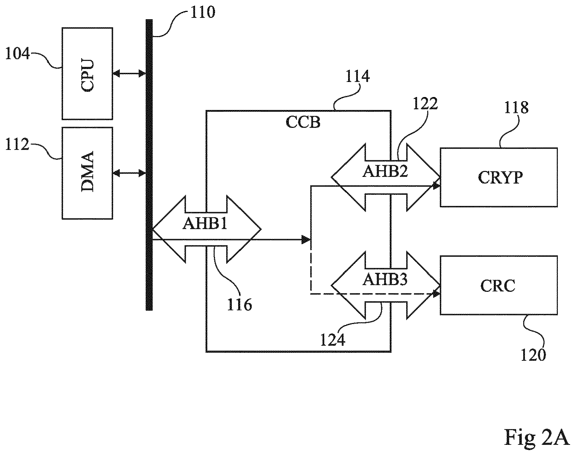

La figure 2A est un schéma par blocs illustrant la mise en oeuvre d'une opération de couplage par le circuit de couplage et chainage 114.

A titre d'exemple, une donnée, par exemple stockée dans une des mémoires 106 ou 108, est transmis au circuit de couplage et chainage 114 par l'intermédiaire du bus 116 (AHB1). Le circuit de couplage et chainage 114 effectue alors une opération dite de couplage en transmettant la donnée au circuit cryptographique 118, par l'intermédiaire du bus 122 (AHB2) et, en parallèle, au circuit de contrôle de redondance cyclique 120, par l'intermédiaire du bus 124 (AHB3). A titre d'exemple, la donnée est une donnée cryptée et le circuit cryptographique 118 est par exemple configuré pour décrypter la donnée, par exemple selon un cryptage AES (de l'anglais « Advanced Encryption Standard »), ou selon un autre type de cryptage. A titre d'exemple, le circuit de contrôle de redondance cyclique 120 est configuré pour calculer un code de redondance cyclique, ou autre type de code de vérification d'erreur, à partir de la donnée cryptée afin de permettre de détecter, par exemple, d'éventuelles altérations futures subies par la donnée, par exemple lors d'un transfert de données vers un autre dispositif électronique distant, ou, dans un autre exemple, lors de son stockage et/ou de son transfert du circuit de couplage et chainage 114 vers la mémoire 106 ou 108. La donnée cryptée est, par exemple, aussi transmise à l'autre dispositif électronique en association du code de vérification d'erreur. A titre d'exemple, l'autre dispositif est un circuit de verrouillage d'une voiture, ou un dispositif domotique et la donnée est une donnée d'authentification. A titre d'exemple, l'autre dispositif est configuré pour décrypter la donnée et, sur la base du décryptage, effectuer plusieurs opérations. A titre d'exemple, la donnée cryptée est transmise, par le dispositif 100 à l'autre dispositif, de manière non filaire, par exemple par l'intermédiaire d'une antenne du dispositif (non représentée en figure 1). La donnée cryptée est par exemple transmise en association du code de vérification d'erreur, calculé par le circuit de contrôle de redondance cyclique 120. A titre d'exemple, l'autre dispositif comprend aussi un circuit de contrôle de redondance cyclique configuré pour calculer un code de vérification d'erreur, sur la base de la donnée cryptée reçue. L'autre dispositif est alors par exemple configuré pour comparer les deux codes de vérification d'erreur et ainsi détecter une quelconque altération de la donnée cryptée reçue.

Dans un autre exemple, la donnée transmise au circuit cryptographique 118, ainsi qu'au circuit de contrôle de redondance cyclique 120 suite à l'opération de couplage, est une donnée non-cryptée et le circuit de contrôle de redondance cyclique 120 est configuré pour calculer un code de vérification d'erreur sur la base de la donnée non cryptée.

Selon un mode de réalisation, l'opération de couplage est effectuée suite à l'envoi, par exemple par le processeur 104 ou par le circuit d'accès direct à la mémoire 112, d'une seule commande d'accès pour écriture. A titre d'exemple, la commande d'accès pour écriture concerne l'écriture de la donnée dans un registre du dispositif cryptographique 118, le circuit de couplage et chainage 114 est alors configuré pour générer une autre demande d'accès pour écriture dans un registre du circuit de contrôle de redondance cyclique 120.

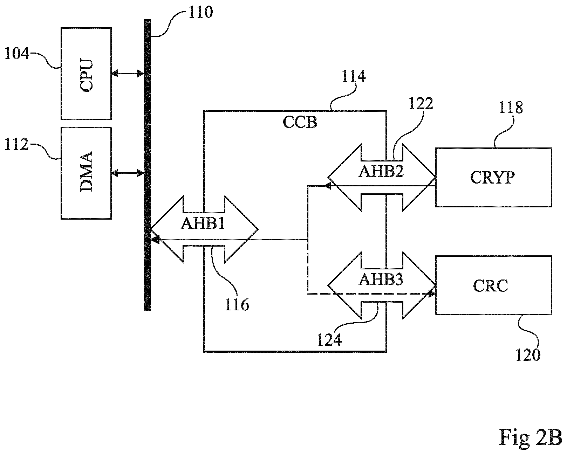

La figure 2B est un schéma par blocs illustrant la mise en oeuvre d'une opération de chaînage par le circuit de couplage et chainage 114.

A titre d'exemple, suite au décryptage d'une donnée cryptée par le circuit cryptographique 118, la donnée est transmise au circuit de couplage et chainage 114 par l'intermédiaire du bus 122. Le circuit de couplage et chainage 114 effectue alors une opération dite de chaînage en transmettant la donnée au bus système 110, par l'intermédiaire du bus 116 et, en parallèle au circuit de contrôle de redondance cyclique 120, par l'intermédiaire du bus 124. A titre d'exemple, le circuit de contrôle de redondance cyclique 120 est par exemple configuré pour calculer un code de redondance cyclique, ou autre code de vérification d'erreur, à partir de la donnée décryptée afin de, par exemple, détecter d'éventuelles altérations subies par la donnée, par exemple lors de son décryptage par le circuit cryptographique 118.

Dans un autre exemple, le circuit cryptographique 118 est configuré pour crypter une donnée et transmettre la donnée cryptée au circuit de couplage et de chaînage 114, par l'intermédiaire du bus 122. L'opération de chainage consiste alors à transmettre la donnée cryptée au bus système 110, par l'intermédiaire du bus 116, ainsi qu'un circuit de contrôle de redondance cyclique 120, par l'intermédiaire du bus 124. Le code de vérification d'erreur est alors calculé, par le circuit 120, sur la base de la donnée cryptée.

Selon un mode de réalisation, l'opération de chaînage est effectuée suite à l'envoi, par exemple par le processeur 104 ou par le circuit d'accès direct à la mémoire 112, d'une seule commande d'accès pour lecture. A titre d'exemple, le circuit de couplage et chainage 114 est alors configuré pour générer une demande d'accès pour écriture dans un registre du circuit de contrôle de redondance cyclique 120.

Dans l'exemple où d'autres circuits périphériques, en plus des circuits 118 et 120, sont reliés au circuit de couplage et de chaînage 114, le circuit 114 est par exemple configuré pour générer, en réponse à une demande d'accès pour écriture ou lecture transitant sur le bus 116, des demandes d'accès pour lecture ou écriture sur des bus reliant le ou les autres circuits périphériques au circuit de couplage et de chaînage 114. Ces demandes d'accès pour lecture ou écriture sont par exemple transmises vers les bus reliant les autres circuits en même temps celle transmise sur le bus 124.

A titre d'exemple, en plus des circuits 118 et du circuit de contrôle de redondance cyclique 120, un circuit configuré pour effectuer des opérations de hachage est en outre relié au circuit de couplage et de chaînage 114 par l'intermédiaire d'un bus dédié. Dans ce cas, le circuit de couplage et de chaînage 114 est par exemple configuré pour intercepter une donnée fournie par le circuit 118 ou par le bus 116, et transmettre une copie de cette donnée non seulement vers le circuit 120, mais également vers cet autre circuit périphérique, avec par exemple une demande d'accès pour écriture. Ainsi, une valeur de hachage est générée, en plus du code de vérification d'erreur calculé par le circuit 120, sur la base de la donnée transmise vers, ou par, le circuit 118.

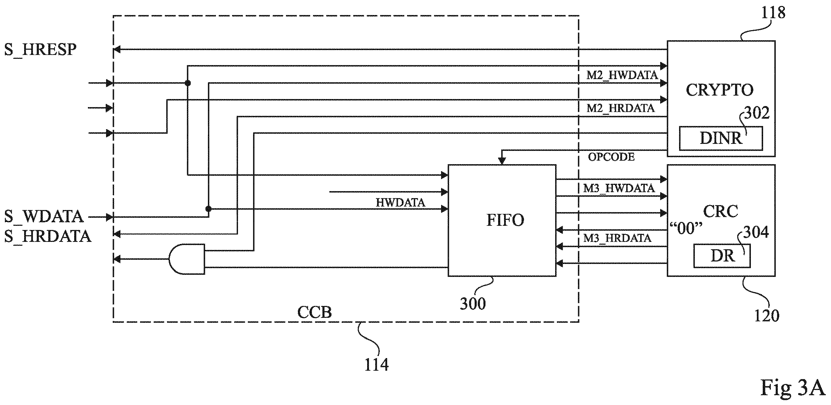

La figure 3A illustre un exemple de données manipulées par le circuit de couplage et chainage 114 lors d'une opération de couplage.

A titre d'exemple, le circuit de couplage et chainage 114 comprend une mémoire volatile 300 (FIFO) reliée au bus 124. La mémoire 300 est par exemple une mémoire de type premier arrivé-premier sorti, ou FIFO (de l'anglais « First In First Out ») configurée pour stocker des données par ordre de réception. A titre d'exemple, une demande d'accès pour lecture dans la mémoire 300 renvoie la donnée la plus ancienne stockée dans la mémoire 300. A titre d'exemple, chaque fois qu'une donnée de la mémoire 300 est envoyée vers le bus 124, la donnée est supprimée de la mémoire 300. Bien que, dans cet exemple, la mémoire 300 est décrite comme étant une mémoire FIFO, d'autres types de mémoire volatile peuvent bien sûr être utilisé.

A titre d'exemple, le processeur 104, ou le circuit d'accès direct à la mémoire 112, envoie une demande d'accès pour écriture d'une donnée CRYP1 dans le circuit cryptographique 118. A titre d'exemple, le bus 116 comprend un bus de données S_WDATA configuré pour transmettre les données à écrire vers le circuit de couplage et chainage 114. A titre d'exemple, le circuit de couplage et chainage 114 est configuré pour transmettre la valeur de la donnée CRYPT1 au circuit cryptographique 118, par l'intermédiaire d'un bus M2_HWDATA du bus 122. A titre d'exemple, la donnée CRYP1 est écrite dans un registre 302 (DINR) du circuit cryptographique 118.

A titre d'exemple, le circuit de couplage et chainage 114 est en outre configuré pour générer une nouvelle demande d'accès pour écriture. A titre d'exemple, le circuit de couplage et chainage 114 transmet à la mémoire 300, la valeur de la donnée CRYP1 par l'intermédiaire d'un bus interne HWDATA.

A titre d'exemple, les circuits 118 et 120 n'ont pas la même vitesse de calcul. La mémoire 300 agit alors comme une mémoire tampon afin de permettre au circuit 120 d'effectuer les calculs à son rythme. A titre d'exemple, la mémoire 300 est configurée pour stocker 8 mots de 32 bits. A titre d'exemple, une demande d'accès pour lecture est transmise par le circuit de calcul de redondance cyclique 120, par l'intermédiaire d'un bus M3_HRDATA du bus 124, à la mémoire 300. La valeur de la donnée CRYP1 est par exemple ensuite écrite dans un registre 304 (DR) du circuit de contrôle de redondance cyclique 120, par l'intermédiaire d'un bus de donnée M3_HWDATA du bus 124.

A titre d'exemple, le circuit de couplage et chainage 114 retourne un code d'erreur d'exécution, par exemple généré par le circuit cryptographique 118, au circuit d'accès direct à la mémoire 112 ou au processeur 104, par l'intermédiaire d'un bus S_HRESP. A titre d'exemple, le circuit cryptographique 118 est configuré pour retourner un code d'erreur d'exécution lorsqu'un problème a lieu lors du chiffrage ou du déchiffrage. A titre d'exemple, si une clef de chiffrement ou de déchiffrement est erronée et empêche par exemple le circuit cryptographique de chiffrer ou déchiffrer une donnée, le circuit 118 retourne un code d'erreur d'exécution. A titre d'exemple, le circuit cryptographique 118 retourne un code d'erreur d'exécution lorsque, pour une quelconque raison, il n'est pas capable de générer une sortie.

Selon un mode de réalisation, dans le cas où le circuit cryptographique signale une erreur par l'intermédiaire d'un code d'erreur d'exécution, les valeurs de données comprises dans la mémoire 300 sont supprimées. A titre d'exemple, le code d'erreur d'exécution est transmis à la mémoire 300 par l'intermédiaire d'un bus OPCODE.

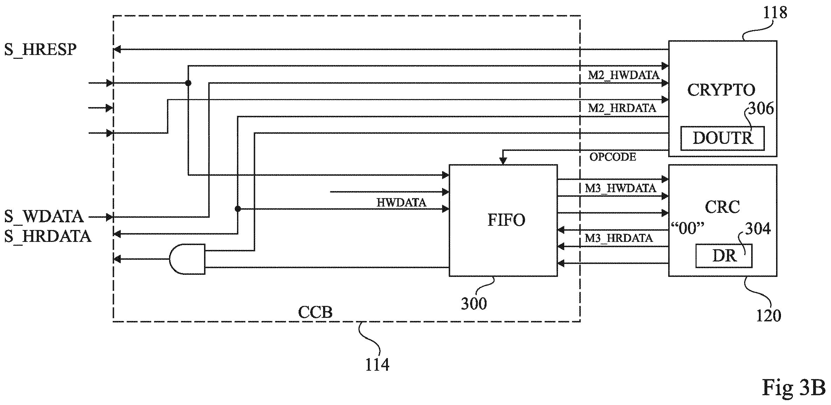

La figure 3B illustre un exemple de données manipulées par le circuit de couplage et chainage 114 lors d'une opération de chaînage.

A titre d'exemple, le processeur 104, ou le circuit d'accès direct à la mémoire 112, envoie une demande d'accès pour lecture d'une donnée de sortie du circuit cryptographique 118, par exemple stockée dans un registre 306 (DOUTR). A titre d'exemple, le bus 122 comprend un bus de données M2_HRDATA configuré pour transmettre la donnée vers le circuit de couplage et chainage 114 puis vers un bus S_HRDATA du bus 116. A titre d'exemple, le circuit de couplage et chainage 114 est configuré pour transmettre la valeur de la donnée fournie par le circuit cryptographique 118 à la mémoire 300, par l'intermédiaire d'un bus HWDATA. A titre d'exemple, la donnée est ensuite fournie au circuit de contrôle de redondance cyclique 120, plus particulièrement au registre 304, par l'intermédiaire du bus M3_HWDATA.

A titre d'exemple, comme pour l'opération de couplage, le circuit de couplage et chainage 114 retourne un code d'erreur d'exécution, fournie par le circuit cryptographique 118, par exemple au circuit d'accès direct à la mémoire 112 ou au processeur 104, par l'intermédiaire du bus S_HRESP. A titre d'exemple, si le code d'erreur d'exécution indique une erreur, les valeurs de données comprises dans la mémoire 300 sont supprimées.

A titre d'exemple, le circuit de couplage et chainage 114 comprend en outre un registre (non illustré en figures 3A et 3B). Le registre comprend par exemple une valeur de configuration, programmable par le processeur 104. A titre d'exemple la valeur de configuration est une valeur sur un ou plusieurs bits. A titre d'exemple, la valeur de configuration est une valeur sur un bit et une programmation à la valeur binaire « 1 » indique au circuit de couplage et chainage 114 que l'opération à suivre est une opération de couplage. Une programmation à la valeur binaire « 0 » indique par exemple au circuit de couplage et chainage 114 que l'opération à suivre est une opération de chaînage. Cet exemple n'est bien sûr pas limitatif, une programmation à la valeur binaire « 1 » peut indiquer une opération de chaînage et une programmation à la valeur « 0 » peut indiquer une opération de couplage. Dans d'autres exemples, la valeur de configuration est codée sur au moins deux bits.

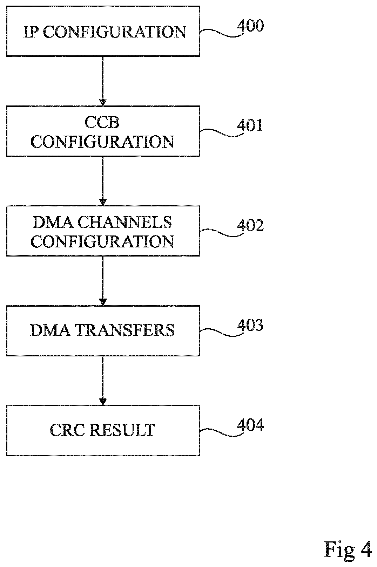

La figure 4 est un organigramme illustrant des étapes d'un procédé de couplage et/ou de chaînage entre deux circuits périphériques, tels que le circuit cryptographique 118 et le circuit de contrôle de redondance cyclique 120.

Dans une étape 400 (IP CONFIGURATION), les deux circuits 118 et 120 sont configurés. A titre d'exemple, la configuration du circuit 118 comprend l'indication d'un type de chaînage associé par exemple à l'algorithme cryptographique utilisé. Dans l'exemple où l'algorithme cryptographique utilisé est l'AES, le chainage correspond par exemple à un des algorithmes parmi les suivants : AES-ECB ( de l'anglais « Electronic Codebook »), AES-CBC ( de l'anglais « Cipher Block Chaining »), AES-CCM (de l'anglais « Counter with Cipher block chaining Message authentification code »), AES-GCM (de l'anglais « Galois/Counter Mode ») etc. A titre d'exemple, la configuration du circuit 118 comprend l'indication d'une taille de clefs utilisées par l'algorithme cryptographique, par exemple 128, 256 dans le cas de l'AES, et par exemple 128, 256 ou 512 bits pour d'autres algorithmes. A titre d'exemple, la configuration du circuit 120 comprend l'indication d'un type de polygones utilisé dans le calcul de redondance cyclique mis en oeuvre par le circuit 120. A titre d'exemple, la configuration du circuit 120 comprend en outre l'indication de la taille des codes de vérification d'erreur, par exemple les code de vérification d'erreur sont codés sur 32, 16 ou 8 bits.

Dans une étape 401 (CCB CONFIGURATION), le processeur 104 programme par exemple la valeur de configuration, stockée dans le registre du circuit de couplage et chainage 114. La programmation de la valeur de configuration permet par exemple d'indiquer au circuit de couplage et chainage 114 si la prochaine opération à exécuter est une opération de couplage ou une opération de chaînage. A titre d'exemple, la programmation de la valeur de configuration s'effectue sur la base du type de la demande d'accès transmise, par l'intermédiaire du bus 116, par le processeur 104 ou par le circuit de contrôle d'accès à la mémoire 112. A titre d'exemple, si la demande d'accès est une demande d'écriture, la valeur de configuration est programmée à l'état indiquant une opération de couplage et si la demande d'accès est une demande de lecture, la valeur de configuration est programmée à l'état indiquant une opération de chaînage.

Dans une étape 402 (DMA CHANNELS CONFIGURATION) des canaux du circuit d'accès direct à la mémoire 112 sont, par exemple, configurés. A titre d'exemple, un premier canal est configuré pour, en cas de couplage, transférer la donnée à chiffrer de la mémoire 106 ou 108 vers le registre 302. A titre d'exemple, un deuxième canal est configuré pour, en cas de chaînage, transférer la donnée comprise dans le registre 306 vers la mémoire 106 ou 108.

Dans une étape 403 (DMA TRANSFERT), postérieure à l'étape 402, les demandes de transferts par le circuit d'accès direct à la mémoire 112 sont par exemple exécutées. A titre d'exemple, les demandes d'accès pour écriture, ou pour lecture, sont transmises au circuit de couplage et chainage 114. Dans le cas d'un couplage, une donnée est écrite dans le registre 302, et la même valeur de donnée est, en parallèle, écrite dans la mémoire 300, ou dans le registre 304. Dans le cas d'un chainage, la valeur de donnée stockée dans le registre 306 est par exemple transmise au bus 110. La donnée est par exemple, en parallèle, interceptée par le circuit de couplage et chainage 114 et transmise à la mémoire 300 ou au registre 304. Le circuit de calcul de redondance cyclique 120 calcule alors par exemple un code d'erreur, sur la base de la donnée.

Dans une étape 404 (CRC RESULT) le code de vérification d'erreur calculé par le circuit de contrôle de redondance cyclique 120 est par exemple transmis au bus 110, par l'intermédiaire du circuit de couplage et chainage 114 et par l'intermédiaire du bus 116. A titre d'exemple, le code de vérification d'erreur permet au processeur 104 de déterminer si la valeur de donnée transmise au circuit de couplage et chainage 118 comprend des bits erronés.

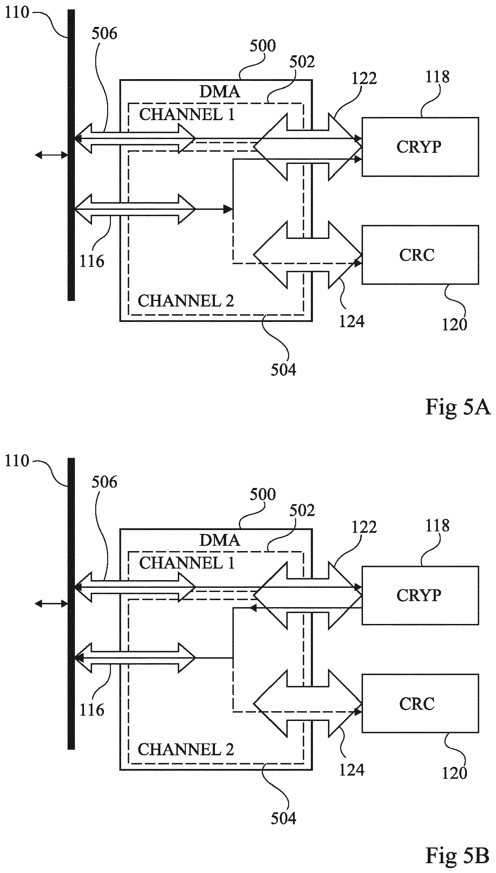

Les figures 5A et 5B sont des schémas par blocs illustrant un autre exemple de mise en oeuvre d'une opération de couplage et d'une opération de chaînage selon un autre mode de réalisation de la présente description.

Dans l'exemple illustrés par les figures 5A et 5B, le circuit de couplage et de chaînage 114 est mis en oeuvre par un circuit d'accès direct à la mémoire 500 (DMA). A titre d'exemple, le circuit 500 comprend un canal 502 (CHANNEL1) et un canal 504 (CHANNEL2). Le canal 502 est par exemple configuré pour relier le bus 122 à un bus 506, lui même relié au bus 110. A titre d'exemple, le canal 502 est utilisé pour effectuer des opérations cryptographiques sans faire intervenir le circuit de contrôle de redondance cyclique 120.

Le canal 504 est par exemple relié au circuit 118 par l'intermédiaire du bus 122 ainsi qu'au circuit 120 par l'intermédiaire du bus 124. Le canal 504 est en outre relié au bus système 110 par l'intermédiaire du bus 116.

Le canal 504 est par exemple configuré pour mettre en oeuvre une opération de couplage, ou de chaînage, comme décrite en relation avec les figures 2A et 2B.

Un avantage des modes de réalisation décrits, comprenant la combinaison, au niveau système, des circuits périphériques avec un circuit de chaînage ou de couplage, est qu'ils permettent d'améliorer les performances en termes de temps de traitement et/ou de fournir de nouvelles fonctionnalités sans modifier les périphériques existants. Les circuits périphériques, tels que par exemple un circuit cryptographique et un circuit de contrôle de redondance cyclique, ou tout autre circuits périphériques, ont la possibilité d'être utilisés séparément ou de manière combinée en fonction du mode d'utilisation du circuit de couplage et de chaînage.

Un autre avantage des modes de réalisation décrits est qu'ils permettent d'effectuer le traitement d'une valeur de donnée par deux circuits périphériques en parallèle. L'utilisation du circuit de couplage et chainage permet de réduire la surface du circuit. De plus, lors de la réalisation d'une opération de couplage, selon les modes de réalisation de la présente description, la donnée est transmise en parallèle au circuit cryptographique et au circuit de contrôle de redondance cyclique. De même, une opération de chaînage, selon les modes de réalisation de la présente description, ne requiert qu'une seule demande de transfert de donnée de la part du processeur 104 ou du circuit d'accès direct à la mémoire 112. Ainsi, les modes de réalisation décrits permettent d'améliorer les performances, et terme de temps de traitement, du dispositif et réduit sa consommation en énergie.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, les circuits périphériques peuvent être d'autres circuits qu'un circuit cryptographique et un circuit de contrôle de redondance cyclique. De même, le type de bus implémentant les bus 116, 122 et 124 ainsi que le protocole de bus leur étant associé peut varier.

## Revendications

1. Circuit de couplage et de chainage configuré (114) pour recevoir, par l'intermédiaire d'un premier bus (116, 122) relié à l'un parmi un bus système (110) d'un dispositif électronique (100) et un premier circuit périphérique (118) du dispositif électronique, une donnée d'origine et la transmettre vers un deuxième bus (122, 116) du dispositif électronique relié à l'autre parmi le bus système et le premier circuit périphérique, le circuit de couplage et de chaînage étant en outre configuré pour intercepter la donnée d'origine et transmettre une copie de la donnée d'origine vers un troisième bus (124) du dispositif relié à un deuxième circuit périphérique (120) du dispositif.

2. Circuit selon la revendication 1 configuré en outre pour générer une demande d'accès pour écriture de la copie de la donnée d'origine, au deuxième circuit (120), sur la base de la réception de la donnée d'origine.

3. Circuit selon la revendication 1 ou 2, dans lequel le premier bus (116) est relié au bus système (110) et le deuxième bus (122) est relié au premier circuit périphérique (118), la donnée d'origine étant transmise au circuit (114) sur la base d'une demande d'accès au premier circuit pour écriture.

4. Circuit selon la revendication 1 ou 2, dans lequel le premier bus (122) est relié au premier circuit périphérique (118) et le deuxième bus (116) est relié au bus système (110), la donnée d'origine étant transmise au circuit (114) sur la base d'une demande d'accès au premier circuit (118) pour lecture.

5. Circuit selon l'une quelconque des revendications 1 à 4, comprenant une mémoire volatile (300), reliée au deuxième circuit périphérique (120), configurée pour recevoir la copie de la donnée transmise et la fournir au deuxième circuit périphérique.

6. Circuit selon la revendication 5, dans lequel la mémoire volatile (300) est une mémoire de type premier arrivé-premier sorti.

7. Dispositif électronique comprenant :
- le circuit de couplage et de chainage (114) selon l'une quelconque des revendications 1 à 6 ;
- les premier et deuxième circuits périphériques (118, 120) ; et
- le bus système (110).

8. Dispositif électronique selon la revendication 7, dans lequel le circuit de couplage et de chaînage (114) est un circuit d'accès direct à la mémoire (500).

9. Dispositif électronique selon la revendication 7 ou 8 dans lequel le deuxième circuit périphérique (120) est un circuit de redondance cyclique configuré pour calculer un code d'erreur sur la base de la donnée fournie par le circuit de couplage et chainage (114).

10. Dispositif électronique selon l'une quelconque des revendications 7 à 9, dans lequel le premier circuit périphérique (118) est un circuit cryptographique.

11. Dispositif électronique selon la revendication 10, dans lequel le circuit cryptographique (118) est configuré pour générer un code d'erreur d'exécution indiquant si une erreur d'exécution a lieu.

12. Dispositif électronique selon la revendication 11, dans lequel le circuit de couplage et de chaînage (114) comprend en outre une mémoire volatile (300) reliée au deuxième circuit périphérique (120) et configurée pour recevoir la copie de la donnée transmise et la fournir au deuxième circuit périphérique, le circuit de couplage et de chaînage étant en outre configuré pour supprimer le contenu de la mémoire volatile sur la base du code d'erreur d'exécution.

13. Dispositif électronique selon l'une quelconque des revendications 7 à 12, comprenant en outre un troisième circuit périphérique relié au circuit de couplage et de chaînage (114) par l'intermédiaire d'un quatrième bus, le circuit de couplage et de chaînage étant en outre configuré pour transmettre une copie de la donnée d'origine vers le quatrième bus.

14. Procédé de couplage ou de chainage comprenant :
- la réception, par un circuit de couplage et de chainage (114) et par l'intermédiaire d'un premier bus (116, 122) relié à l'un parmi un bus système (110) d'un dispositif électronique (100) et un premier circuit périphérique (118) du dispositif électronique, d'une donnée d'origine ;
- la transmission, par le circuit de couplage et de chaînage et vers un deuxième bus (122, 116) du dispositif électronique relié à l'autre parmi le bus système et le premier circuit périphérique ;
- l'interception, par le circuit de couplage et de chaînage, de la donnée d'origine ; et
- la transmission, par le circuit de couplage et de chaînage, d'une copie de la donnée d'origine, vers un troisième bus (124) du dispositif relié à un deuxième circuit périphérique (120) du dispositif.

15. Procédé selon la revendication 14, dans lequel une demande d'accès au deuxième circuit périphérique (120) pour écriture de la copie de la donnée d'origine est générée par le circuit de couplage et de chaînage (114) sur la base de la réception de la donnée d'origine.

16. Procédé selon la revendication 15, dans lequel le circuit de couplage et de chaînage (114) génère la demande d'accès au deuxième circuit périphérique (120) pour écriture sur la base d'une demande d'accès pour écriture ou de lecture dans le premier circuit périphérique (118).
